# EUROPEAN PATENT SPECIFICATION

(11) **EP 3 300 051 B1**
(45) Date of publication and mention of the grant of the patent: **13.11.2024**
(21) Application number: 16201488.0
(22) Date of filing: 30.11.2016
(51) Int. Cl.: G08G 1/081, G08G 1/087, G08G 1/097, G08G 1/01, G08G 1/08, H04Q 9/00, H04L 67/12, H04L 67/2885, H04L 67/52, G08G 1/083, H04L 67/55

(54) **METHOD AND EQUIPMENT FOR PROCESSING INFORMATION IN INTELLIGENT TRAFFIC CLOUD CONTROL SYSTEM**
VERFAHREN UND AUSRÜSTUNG ZUR VERARBEITUNG VON INFORMATIONEN IN INTELLIGENTEM STEUERUNGSSYSTEM EINER DATENVERKEHRS-CLOUD
PROCÉDÉ ET ÉQUIPEMENT PERMETTANT DE TRAITER DES INFORMATIONS DANS UN SYSTÈME DE COMMANDE CLOUD DE TRAFIC INTELLIGENT

(30) Priority: 26.09.2016 CN 201610851718
(43) Date of publication of application: 28.03.2018
(73) Proprietor: Kyland Smartran Co., Ltd, Beijing 100041 (CN)
(72) Inventor: ZHANG, Fusheng, Beijing, 100041 (CN); MA, Guozhen, Beijing, 100041 (CN); YAN, Zhiwei, Beijing, 100041 (CN)
(74) Representative: Pfenning, Meinig & Partner mbB

(56) References cited:
- EP-A1- 3 139 360
- WO-A1-2015/099387
- WO-A1-2016/127803
- WO-A1-2016/127950
- US-A1- 2008 074 289
- US-A1- 2015 199 903
- US-A1- 2016 076 207
- US-B1- 6 317 058

## Description

### Field

The present invention relates to the field of controlling road traffic, and particularly to a method and equipment for processing information in an intelligent traffic cloud control system.

### Background

As the economy is developing constantly, the population in towns, and the number of vehicles are growing rapidly, thus increasingly complicating traffic conditions at crossings in the cities, which may require a higher capacity of a traffic control system to exchange and process data information.

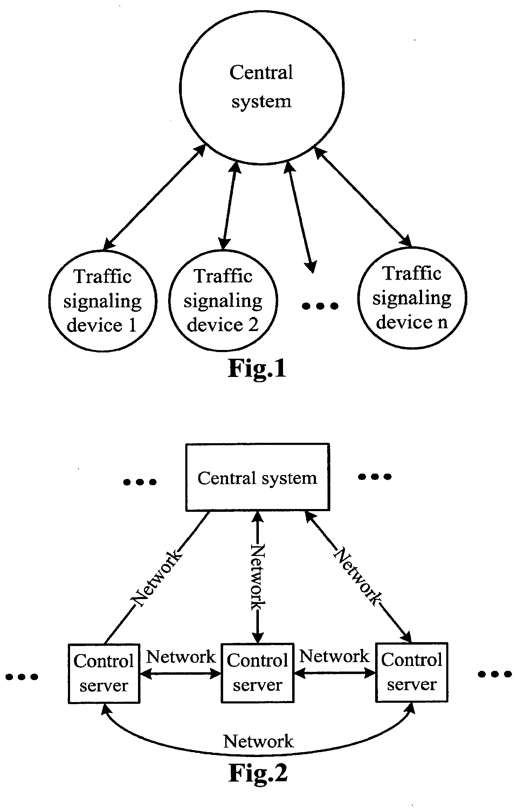

As illustrated in Fig.1, the traffic control system includes a central system and a plurality of traffic signaling devices.

The traffic signaling devices communicating with the central system transmit acquired field data information to the central system, and then the central system stores, calculates, and processes on the data information acquired by the respective traffic signaling devices. The respective traffic signaling devices transmit the real-time information concurrently to the central system, so that there is a large amount of data information to be received by the central system; and in this method for processing data information, the data may be transmitted at a low transmission rate; and there may be a large amount of data information to be stored in the central system, and a heavy computing burden on the central system, and also the central system may control the respective traffic signaling devices in a less real-time manner.

At present such a distributed traffic control system is developed further to the processing method above that includes a central system and a plurality of traffic cloud nodes, and in the distributed traffic control system, a large number of distributed traffic cloud nodes calculate and process data information locally in a cloud computing mode, where the plurality of traffic cloud nodes are grouped into micro cloud architectures, and the respective traffic cloud nodes store, analyze, process, and exchange the data information to thereby process the data information throughout the traffic control system, and manage signaling lamps according to a traffic flow, and other vehicle information.

However this method for processing data information may still suffer from the following drawbacks.

Data information is limited to computing and processing on a single traffic cloud node, and may not be manipulated globally by the upper central system, so that the respective traffic cloud nodes may be poorly controlled in a coordinated mode between them, and the data information may not be exchanged selectively between one cloud node and another, or between a cloud node and the central system, thus resulting in a large amount of data to be stored in the central system, and a heavy computing burden on the central system.
A document (US2008/0074289A1) discloses a system including a master controller, a plurality of wireless nodes dispersed in a geographic area and a plurality of traffic signal lights dispersed in the geographic area.

The traffic signal lights are communicatively coupled to the master controller via the plurality of wireless nodes. Each wireless node in the plurality of wireless nodes is associated with a distinct Internet protocol address and a wireless communication link provides Internet protocol based communication between the plurality of wireless nodes and the master controller. The plurality of wireless nodes receives control data packets for the communicatively coupled traffic signal lights from the master controller via the wireless communication link. The control data packets comprise the distinct Internet protocol address and operational instructions for at least one traffic signal light communicatively coupled to the wireless node and each traffic signal light is responsive to the operational instructions in the control data packets.

A document (US2016/0076207A1) discloses that technologies for communicating roadway information include a plurality of roadway markers configured to propagate communications amongst each other. To do so, each roadway marker is configured to transmit communications to one or more other roadway markers. The communications may include sensor data generated by a sensor of a roadway marker. One or more roadway markers may transmit the sensor data to a roadway controller. Additionally or alternatively, the communication may include an alert message. A roadway marker may include a local alert device and be configured to activate the alert device in response to receiving an alert message. Additionally, one or more roadway markers may communicate with a roadway controller, a roadway traffic device, and/or an in-vehicle computing system of a vehicle to propagate roadway marker sensor data and/or alert messages. The roadway controller may be configured to control the roadway traffic devices, roadway makers, and/or communicate with remote computing devices.

### Summary

Embodiments of the invention provide a method as defined in claim 1 and equipment as defined in claim 7 for processing information in an intelligent traffic cloud control system so as to address the problems in the prior art of poor control on the respective control servers in a coordinated mode between them, a large amount of data to be store in the central system, and a heavy computing burden on the central system.

Particular technical solutions according to the embodiments of the invention are as follows:

An embodiment of the invention provides a method for processing information in an intelligent traffic control system based on cloud computing including at least a plurality of control servers, and a plurality of IP-enabled field devices, or at least a plurality of control servers, a plurality of IP-enabled field devices, and a central system, wherein the central system is connected with the control servers over a network, and the IP-enabled field devices are connected with the control servers over IP address based broadband buses; and the method includes:
distributing, by a first node, subscription messages to the control servers to instruct the control servers to return, by transmission, information acquired by the IP-enabled field devices local to the control servers, and corresponding processing results to the first node upon determining that a preset condition indicated by the subscription messages is satisfied, wherein the first node is the central system, or any one of the control servers; where the IP-enabled field device refers to a device, distributed at a respective traffic crossing, configured to acquire data of the traffic crossing, to monitor and control in real time a traffic condition at the traffic crossing;
receiving, by the first node, the information acquired by the IP-enabled field devices, and the corresponding processing results, returned by the control servers; and
analyzing, by the first node, the obtained information acquired by the IP-enabled field devices, and corresponding processing results, generating a corresponding control strategy based upon a result of analyzing; and enforcing the generated control strategy in a case that the first node is the any one of the control servers, or issuing the generated control strategy to a corresponding control server in a case that the first node is the central system, so that the corresponding control server receives and enforces the generated control strategy;
wherein whether the preset condition is satisfied is determined by any one of the control servers after the any one of the control servers analyzes information acquired by one or more corresponding IP-enabled field devices; wherein the preset condition comprises one or any combination of the following conditions:
   that there is a traffic jam occurring around the one control server;
   that there is a traffic accident occurring around the one control server;
   that the amount of the information acquired by the IP-enabled field devices, and the corresponding processing result stored in the one control server is above a preset threshold; and
   that there is an urgent event occurring around the one control server or the first node.

Optionally before the first node distributes the subscription messages to the respective control servers, the method further includes:
collecting and storing, by the respective control servers, the local information acquired by the IP-enabled field devices, and corresponding processing results.

Optionally distributing, by the first node, the subscription messages to the respective control servers includes:
if the first node is the central system, then distributing, by the first node, the subscription messages to all the control servers; and
if the first node is one of the control servers, then distributing, by the first node, the subscription messages to specified ones of the other control servers.

Optionally distributing, by the first node, a subscription message to one of the control servers includes:
distributing, by the first node, the corresponding subscription message to the one control server based upon the geographical position of the one control server; or
distributing, by the first node, the corresponding subscription message to the one control server based upon a surrounding traffic condition of the one control server; or
distributing, by the first node, the corresponding subscription message to the one control server based upon the node type of the one control server.

Optionally analyzing, by the first node, the obtained information acquired by the IP-enabled field devices, and corresponding processing results, and generating the corresponding control strategy based upon the result of analyzing includes:
if the first node is the central system, then analyzing, by the first node, the obtained information acquired by the IP-enabled field devices, and corresponding processing results, returned by the respective control servers through cloud computing, and generating a corresponding coordinated control strategy based upon the result of analyzing; and
If the first node is one of the control servers, then analyzing, by the first node, the obtained information acquired by the IP-enabled field devices, and corresponding processing results, returned by the respective control servers through edge computing, and generating a corresponding local control strategy based upon the result of analyzing.

Optionally the method further includes:
if the first node determines that the generated control strategy fails to be enforced, then notifying the central system, so that the central system newly collects corresponding information acquired by the IP-enabled field devices, and corresponding processing results for the control strategy, and generates a corresponding optimized strategy.

An embodiment of the invention provides an equipment for processing information in an intelligent traffic control system based on cloud computing including at least a plurality of control servers, and a plurality of IP-enabled field devices, or at least a plurality of control servers, a plurality of IP-enabled field devices, and a central system, wherein the central system is connected with the control servers over a network, and the IP-enabled field devices are connected with the control servers over IP address based broadband buses; and the equipment includes:
a distributing unit configured to distribute subscription messages to the control servers to instruct the control servers to return, by transmission, information acquired by IP-enabled field device local to the control servers, and corresponding processing results to the first node upon determining that a preset condition indicated by the subscription messages is satisfied, where the first node is the central system, or any one of the control servers; where the IP-enabled field device refers to a device, distributed at a respective traffic crossing, configured to acquire data of the traffic crossing, to monitor and control in real time a traffic condition at the traffic crossing;
a receiving unit configured to receive the information acquired by the IP-enabled field devices, and the corresponding processing results, returned by the control servers; and
a generating unit configured to analyze the obtained information acquired by the IP-enabled field devices, and corresponding processing results, to generate a corresponding control strategy based upon a result of analyzing, and to enforce the generated control strategy in a case that the first node is the any one of the control servers, or issue the generated control strategy to a corresponding control server in a case that the first node is the central system, so that the corresponding control server receives and enforces the generated control strategy;
wherein whether the preset condition is satisfied is determined by any one of the control servers after the any one of the control servers analyzes information acquired by one or more corresponding IP-enabled field devices; wherein the preset condition comprises one or any combination of the following conditions:
   that there is a traffic jam occurring around the one control server;
   that there is a traffic accident occurring around the one control server;
   that the amount of the information acquired by the IP-enabled field devices, and the corresponding processing result stored in the one control server is above a preset threshold; and
   that there is an urgent event occurring around the one control server or the first node.

Optionally before the subscription messages are distributed to the respective control servers, the equipment further includes:
a collecting unit configured to collect and store the local information acquired by the IP-enabled field devices, and corresponding processing results.

Optionally the distributing unit configured to distribute the subscription messages to the control servers is configured:
if the equipment is the central system, to distribute the subscription messages to all the control servers; and
if the equipment is one of the control servers, to distribute the subscription messages to specified ones of the other control servers.

Optionally the distributing unit configured to distribute a subscription message to one of the control servers is further configured:
to distribute the corresponding subscription message to the one control server based upon the geographical position of the one control server; or
to distribute the corresponding subscription message to the one control server based upon a surrounding traffic condition of the one control server; or
to distribute the corresponding subscription message to the one control server based upon the node type of the one control server.

Optionally the generating unit configured to analyze the obtained information acquired by the IP-enabled field devices, and corresponding processing results, and to generate the corresponding control strategy based upon the result of analyzing is configured:
if the equipment is the central system, to analyze the obtained information acquired by the IP-enabled field devices, and corresponding processing results, returned by the respective control servers through cloud computing, and to generate a corresponding coordinated control strategy based upon the result of analyzing; and
if the equipment is one of the control servers, to analyze the obtained information acquired by the IP-enabled field devices, and corresponding processing results, returned by the respective control servers through edge computing, and to generate a local control strategy based upon the result of analyzing.

Optionally the generating unit is further configured:
if it is determined that the generated control strategy fails to be enforced, to notify the central system, so that the central system newly collects corresponding information acquired by the IP-enabled field devices, and corresponding processing results for the control strategy, and generates a corresponding optimized strategy.

In summary, in the embodiments of the invention, in order to process the data information in the intelligent traffic cloud control system, the first node distributes the subscription messages respectively to the control servers, and the control servers receive the subscription messages distributed by the first node; and the control servers return the information acquired by the IP-enabled field devices, and the corresponding processing results, indicated by the subscription message to the first node upon determining that the preset condition indicated by the subscription messages is satisfied, and the first node analyzes the returned information acquired by the IP-enabled field devices, and corresponding processing results, and generates the corresponding coordinated control strategy or the local control strategy based upon the result of analyzing. If the first node is the central system, then the central system will issue the generated coordinated control strategy to the corresponding control servers; and if the first node is the first control server, then the first control server will enforce the generated local control strategy.

With the method above for processing information, the respective control servers acquire and store the information acquired by the IP-enabled field devices, and the corresponding processing results to thereby store the information in a distributed mode. The control servers will return the information acquired by the IP-enabled field devices, and the corresponding processing results, indicated by the subscription messages to the first node only upon determining that the preset condition indicated by the subscription messages is satisfied, thus lowering the amount of information transmitted throughout the intelligent traffic cloud control system so as to ensure the efficiency of transmission in the system. If the first node is the central system, then the central system will generate the corresponding coordinated control strategy for specified ones of the control servers to thereby improve the effect of adjusting a traffic road condition in some area while lowering the amount of stored information, and the workload of calculation in the central system; and if the first node is the first control server, then the first control server will obtain the information acquired by the IP-enabled field devices, and the corresponding processing results, of any specified one of other control servers, so that the first control server can manage itself to thereby lower the workload of information calculation in the central system, and also enable the information to be shared among the respective control servers. In this method for processing information, the message subscription and distribution mechanisms, and the distributed data storage and sharing, cloud computing, edge computing, and other technologies can be applied in combination to enable the field control servers to store the local data, and the central system to subscribe to the data so as to provide the solution to reasonable storage, rapid sharing, and real-time processing of the data in the traffic system.

### Brief Description of the Drawings

Fig.1 is a structural diagram of the legend traffic control system;
Fig.2 is a structural diagram of an intelligent traffic cloud control system;
Fig.3 is a schematic diagram of a control server connected with IP-enabled field devices over an IP addressed based broadband bus;
Fig.4 is a detailed flow chart of processing information in the intelligent traffic cloud control system including a first node which is the central system according to an embodiment of the invention;
Fig.5 is a detailed flow chart of processing information in the intelligent traffic cloud control system including a first node which is one of the control servers according to an embodiment of the invention; and
Fig.6 is a schematic structural diagram of an equipment for processing information according to an embodiment of the invention.

### Detailed Description of the Embodiments

Preferred embodiments of the invention will be described below in further details with reference to the drawings.

In a real application, an intelligent traffic cloud control system includes at least a plurality of control servers, and a plurality of IP-enabled field devices; or includes at least a plurality of control servers, a plurality of IP-enabled field devices, and a central system.

Referring to Fig.2, the intelligent traffic cloud control system includes at least one central system, and a plurality of control servers, for example, a general server of the intelligent traffic cloud control system is equivalent to a central system, a server at each crossing is equivalent to a control server, and the central system is connected with the control servers over networks, and the respective control servers are connected over the networks.

This example not covered by the scope of the claims is merely a preferred example, where the central system in this example is merely one of a number of types of central systems, and the control server in this embodiment is also merely one of a number of types of control servers.

Of course, the invention can be embodied in the following embodiments, but will not be limited thereto.

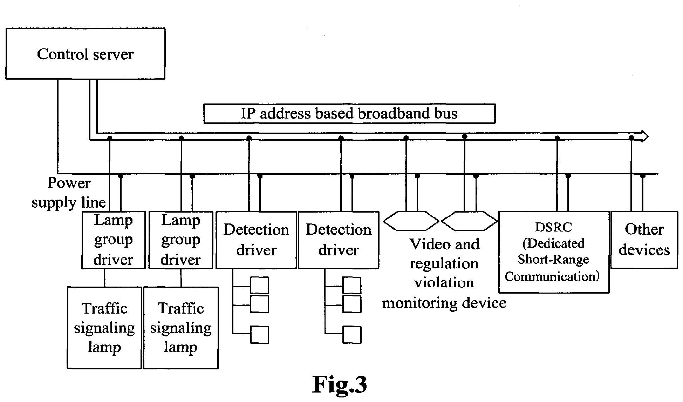

Referring to Fig.3, a control server is connected with the IP-enabled field devices over an IP addressed based broadband bus.

The IP-enabled field device refers to a device, distributed at a respective traffic crossing, configured to acquire data of the traffic crossing, to monitor and control in real time the traffic condition at the crossing, etc. (e.g., a traffic signaling lamp, a detecting device, a video and regulation violation monitoring device, etc.).

Particularly the IP-enabled field device can further include a first class of IP-enabled field device, and a second class of IP-enabled field device, where the first class of IP-enabled field device refers to an IP-enabled field device which can be connected directly with an IP address based broadband bus (e.g., a video detection and regulation violation monitoring device, etc.), and the second class of IP-enabled field device refers to an IP-enabled field device which needs to be connected with an IP address based broadband bus through a corresponding driver device (e.g., a traffic signaling lamp, a detecting device, etc.).

In an embodiment of the invention, distributed storage refers to that the respective control servers in the intelligent traffic cloud control system collect information acquired by their respective local IP-enabled field devices, and store corresponding processing results, where the corresponding processing results refer to processed data obtained by the respective control servers processing the collected information acquired by the IP-enabled field devices.

In other words, in an embodiment of the invention, the respective control servers in the intelligent traffic cloud control system store the information acquired by the respective IP-enabled field devices, and the corresponding processing results on the respective control servers in a distributed mode.

For example, a control server A in the intelligent traffic cloud control system collects information (e.g., video monitoring information, etc.) acquired by an IP-enabled field device which is a field video and regulation violation monitoring device (e.g., a video camera, etc.) , and store the information acquired by the IP-enabled field device, and a corresponding processing result on the control server A; and a control server B in the intelligent traffic cloud control system collects information (e.g., video monitoring information, etc.) acquired by an IP-enabled field device which is a field video and regulation violation monitoring device (e.g., a video camera, etc.) , and store the information acquired by the IP-enabled field device, and a corresponding processing result on the control server B.

In an embodiment of the invention, a first node distributes a subscription message to a control server to instruct the control server to return information acquired by an IP-enabled field device local to the control server, and a corresponding processing result to the first node upon determining that a preset condition is satisfied.

However the first node may be the central system, or any one of the control servers.

An intelligent traffic cloud control system including at least a plurality of intelligent cloud nodes, a plurality of IP-enabled field devices, and a central system which is a first node according to an embodiment of the invention will be described below in details with reference to the drawings.

In a real application, the central system is configured to exchange data with the plurality of control servers over the networks, to share the data stored by the control servers connected therewith, to analyze and process the shared data, and to obtain a result of analyzing the data; and to generate a coordinated control strategy according to the result of analyzing the data, and to transmit the coordinated control strategy to the corresponding control servers. The control servers are further configured to retrieve the coordinated control strategy from the central system through cloud computing, and to perform corresponding operations according to the coordinated control strategy.

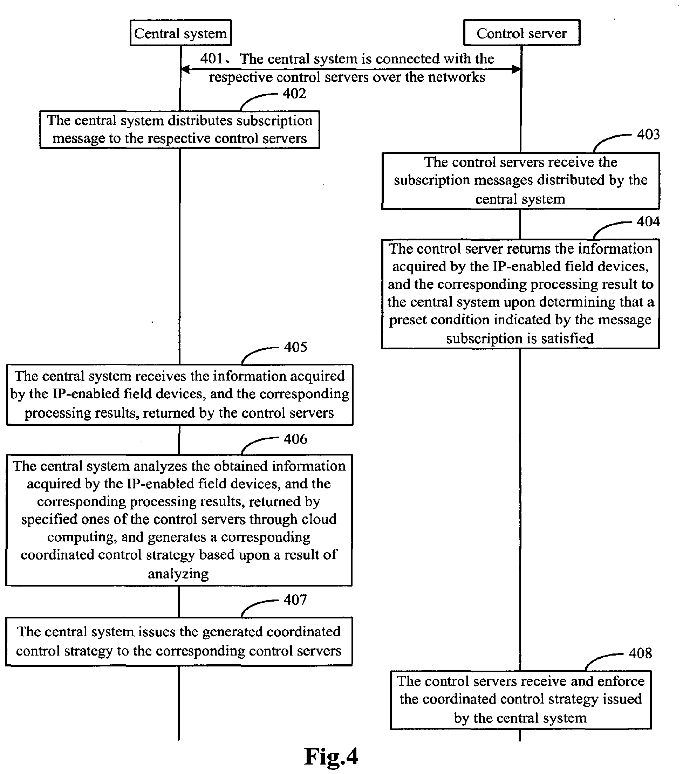

Fig.4 illustrates a detailed flow chart of processing information in the intelligent traffic cloud control system including the first node which is the central system according to an embodiment of the invention.

In the step 401, the central system is connected with the respective control servers over the networks.

In the step 402, the central system distributes subscription message to the respective control servers.

If the first node is the central system, then the central system distributes the subscription message to the respective control servers, where the subscription messages instruct the control server to return such information acquired by the IP-enabled field devices, and corresponding processing results that are relatively rough and global, and particularly include "Vehicle flow", "Passerby flow", "Names of road segments with a traffic jam", etc., and the central system analyzes the obtained information acquired by the IP-enabled field devices, and corresponding processing results, which are returned by the respective control servers through cloud computing, and generate a corresponding coordinated control strategy for the respective control servers based upon a result of analyzing the information.

The central system distributes the corresponding subscription messages respectively to the respective control servers based upon different conditions of the respective control servers (e.g., geographical positions, surrounding traffic conditions, node types of the control servers, etc.), where the subscription messages instruct the control servers to return the information acquired by the IP-enabled field devices, and the corresponding processing results to the central system, upon determining that the preset condition is satisfied.

Particularly the preset condition for the control servers includes but will not be limited to the following three scenarios:
In a first scenario, the central system distributes the corresponding subscription messages respectively to the respective control servers based upon different geographical positions of the respective control servers.

For example, if a control server A is positioned downtown where there are a large number of motored vehicles, non-motor vehicles, and passersby passing crossings, then the central system will distribute such a subscription message to the control server A that includes corresponding information contents including a shorter interval of time at which the control server A returns information acquired by IP-enabled field devices, and a corresponding processing result periodically to the central system (for example, the control server A returns information acquired by IP-enabled field devices, and a corresponding processing result to the central system once every 5 minutes), more items in the information acquired by the IP-enabled field devices, and the corresponding processing result to be returned by the control server to the central system (e.g., a traffic flow passing a crossing in 30 minutes, the number of vehicles passing the crossing while a green lamp was being lightened last time, the distance over vehicles extend on a road segment with a traffic jam while a red lamp is being lightened, video monitoring information, etc.), etc.; and if a control server B is positioned in the suburb where there are a small number of motored vehicles, non-motor vehicles, and passersby passing crossings, then the central system will distribute such a subscription message to the control server B that includes corresponding information contents including a longer interval of time at which the control server B returns information acquired by IP-enabled field devices, and a corresponding processing result periodically to the central system (for example, the control server B returns information acquired by IP-enabled field devices, and a corresponding processing result to the central system once every 30 minutes), less items in the information acquired by the IP-enabled field devices, and the corresponding processing result to be returned by the control server to the central system (e.g., only a traffic flow passing a crossing in 30 minutes needs to be uploaded, etc.), etc.

In a second scenario, the central system distributes corresponding subscription messages respectively to the respective control servers based upon different surrounding traffic conditions of the respective control servers.

For example, if there is a good surrounding traffic condition at a crossing where a control server A is located (for example, if there are a small number of motored vehicles, non-motor vehicles, and passersby passing crossings in other periods of time than rush hours), then the central system will distribute such a subscription message to the control server A that includes information contents including a longer interval of time at which the control server A returns information acquired by IP-enabled field devices, and a corresponding processing result periodically to the central system (for example, the control server A returns information acquired by IP-enabled field devices, and a corresponding processing result to the central system once every 30 minutes), less items in the information acquired by the IP-enabled field devices, and the corresponding processing result to be returned by the control server to the central system (e.g., only a traffic flow passing a crossing in 30 minutes needs to be uploaded, etc.), etc.; and if there is a poor surrounding traffic condition at the crossing where the control server A is located (for example, if there are a large number of motored vehicles, non-motor vehicles, and passersby passing crossings during the rush hours), the central system will distribute such a subscription message to the control server A that includes corresponding information contents including a longer interval of time at which the control server A returns information acquired by IP-enabled field devices, and a corresponding processing result periodically to the central system (for example, the control server A returns information acquired by IP-enabled field devices, and a corresponding processing result to the central system once every 5 minutes), more items in the information acquired by the IP-enabled field devices, and the corresponding processing result to be returned by the control server to the central system (e.g., a traffic flow passing a crossing in 30 minutes, the number of vehicles passing the crossing while a green lamp was being lightened last time, the distance over vehicles extend on a road segment with a traffic jam while a red lamp is being lightened, video monitoring information, etc.), etc.

In a third scenario, the central system distributes corresponding subscription messages respectively to the respective control servers based upon different node types of the respective control servers.

For example, if an IP-enabled field device connected with the control server A is a speed measuring device, then the central system will issue a corresponding subscription message to the control server A (for example, the subscription message instructs the control server A to return detected real-time speed information of respective vehicles passing the speed measuring device in some period of time T1 to the central system), where the value of T1 can be any value taken under a real condition; and if a control server B is a traffic flow counting device, then the central system will distribute a corresponding subscription message to the control server B (for example, the subscription message instructs the control server B to return information on the number of vehicles passing the traffic flow counting device in some period of time T2 to the central system), where the value of T2 can be any value taken under a real condition.

In the step 403, the control servers receive the subscription messages distributed by the central system.

The control servers receive the subscription messages distributed by the central system based upon the different conditions of the control servers (e.g., geographical positions, surrounding traffic conditions, node types of the control servers, etc.)

Particularly the different conditions of the control servers include but will not be limited to the following scenarios:
In a first scenario, the control servers the subscription messages distributed by the central system based upon the geographical positions of the control servers;
For example, if a control server A is positioned downtown where there are a large number of motored vehicles, non-motor vehicles, and passersby passing crossings, then the control server A will receive such a subscription message distributed by the central system to the control server A that includes corresponding information contents including a shorter interval of time at which the control server A returns information acquired by IP-enabled field devices, and a corresponding processing result periodically to the central system (for example, the control server A returns information acquired by IP-enabled field devices, and a corresponding processing result to the central system once every 5 minutes), more items in the information acquired by the IP-enabled field devices, and the corresponding processing result to be returned by the control server to the central system (e.g., a traffic flow passing a crossing in 30 minutes, the number of vehicles passing the crossing while a green lamp was being lightened last time, the distance over vehicles extend on a road segment with a traffic jam while a red lamp is being lightened, video monitoring information, etc.), etc.; and if a control server B is positioned in the suburb where there are a small number of motored vehicles, non-motor vehicles, and passersby passing crossings, then the control server B will receive such a subscription message distributed by the central system to the control server B that includes corresponding information contents including a longer interval of time at which the control server B returns information acquired by IP-enabled field devices, and a corresponding processing result periodically to the central system (for example, the control server B returns information acquired by IP-enabled field devices, and a corresponding processing result to the central system once every 30 minutes), less items in the information acquired by the IP-enabled field devices, and the corresponding processing result to be returned by the control server to the central system (e.g., only a traffic flow passing a crossing in 30 minutes needs to be uploaded, etc.), etc.

In a second scenario, the control server receives a subscription message distributed by the central system based upon a surrounding traffic condition of the control server.

For example, if there is a good surrounding traffic condition at a crossing where a control server A is located (for example, if there are a small number of motored vehicles, non-motor vehicles, and passersby passing crossings in other periods of time than rush hours), then the control server A will receive such a subscription message issued by the central system to the control server A that includes information contents including a longer interval of time at which the control server A returns information acquired by IP-enabled field devices, and a corresponding processing result periodically to the central system (for example, the control server A returns information acquired by IP-enabled field devices, and a corresponding processing result to the central system once every 30 minutes), less items in the information acquired by the IP-enabled field devices, and the corresponding processing result to be returned by the control server to the central system (e.g., only a traffic flow passing a crossing in 30 minutes needs to be uploaded, etc.), etc.; and if there is a poor surrounding traffic condition at the crossing where the control server A is located (for example, if there are a large number of motored vehicles, non-motor vehicles, and passerby's passing crossings during the rush hours), the control server A will receive such a subscription message issued by the central system to the control server A that includes corresponding information contents including a longer interval of time at which the control server A returns information acquired by IP-enabled field devices, and a corresponding processing result periodically to the central system (for example, the control server A returns information acquired by IP-enabled field devices, and a corresponding processing result to the central system once every 5 minutes), more items in the information acquired by the IP-enabled field devices, and the corresponding processing result to be returned by the control server to the central system (e.g., a traffic flow passing a crossing in 30 minutes, the number of vehicles passing the crossing while a green lamp was being lightened last time, the distance over vehicles extend on a road segment with a traffic jam while a red lamp is being lightened, video monitoring information, etc.), etc.

In a third scenario, the control server receives a subscription message issued by the central system based upon the node type of the control server.

For example, if an IP-enabled field device connected with the control server A is a speed measuring device, then the control server A will receive a subscription message issued by the central system to the control server A (for example, the subscription message instructs the control server A to return detected real-time speed information of respective vehicles passing the speed measuring device in some period of time T1 to the central system), where the value of T1 can be any value taken under a real condition; and if a control server B is a traffic flow counting device, then the control server B will receive a subscription message issued by the central system to the control server B (for example, the subscription message instructs the control server B to return information on the number of vehicles passing the traffic flow counting device in some period of time T2 to the central system), where the value of T2 can be any value taken under a real condition.

In the step 404, the control server returns the information acquired by the IP-enabled field devices, and the corresponding processing result to the central system upon determining that a preset condition indicated by the message subscription is satisfied.

The control server collects the information acquired by the IP-enabled field devices, analyzes the collected information acquired by the IP-enabled field devices, obtains the processing result, and stores locally the information acquired by the IP-enabled field devices, and the corresponding processing result in a distributed mode.

The control server returns the information acquired by the IP-enabled field devices, and the corresponding processing result to the central system upon determining that the preset condition indicated by the message subscription is satisfied, where the information items of the information acquired by the IP-enabled field devices, and the corresponding processing result are indicated by the subscription message.

Particularly there are but will not be limited to the following four scenarios, and any combination thereof:
In a first scenario, if there is a traffic jam occurring around the control server, then the control server will return the information acquired by the IP-enabled field devices, and the corresponding processing result to the central system.

For example, the control server A collects the information acquired by the IP-enabled field devices (e.g., a vehicle speed, a traffic flow, etc.) through video monitoring devices (e.g., video cameras, etc.), analyzes the collected information acquired by the IP-enabled field devices, and obtains the corresponding processing result, and if the control server A determines a traffic jam occurring around the control server A according to the obtained information acquired by the IP-enabled field devices, and corresponding processing result, then the control server A will return the information acquired by the IP-enabled field devices, and the corresponding processing result to the central system, where the returned information acquired by the IP-enabled field devices, and corresponding processing result is indicated by the subscription message.

In a second scenario, if there is a traffic accident occurring around the control server, then the control server will return the information acquired by the IP-enabled field devices, and the corresponding processing result to the central system.

For example, the control server A collects the information acquired by the IP-enabled field devices through video monitoring devices (e.g., video cameras, etc.), analyzes the collected information acquired by the IP-enabled field devices, and obtains the corresponding processing result (e.g., traffic flow information, the distance over vehicles extend on a road segment with a traffic jam while a red lamp was being lightened last time, the average speed of vehicles passing a crossing while a green lamp was being lightened last time, etc.), and if the control server A determines a small number N (e.g., N<5) of vehicles passing the crossing while the green lamp was being lightened last time, a low average speed V (e.g., V<5km/h) of the vehicles passing the crossing while the green lamp was being lightened last time, and a long distance S (e.g., S>80 meters) over the vehicles extend on the road segment with a traffic jam while the red lamp was being lightened last time, according to the obtained information acquired by the IP-enabled field devices, and corresponding processing result, then the control server A will determine a traffic accident occurring around the control server, and thus return the information acquired by the IP-enabled field devices, and the corresponding processing result to the central system, where the values of N, S, and V can be any values taken under a real condition.

In a third scenario, if the amount of the information acquired by the IP-enabled field devices, and the corresponding processing result stored in the control server is above a preset threshold, then the control server will return the information acquired by the IP-enabled field devices, and the corresponding processing result to the central system.

For example, the control server A collects the information acquired by the IP-enabled field devices (e.g., video monitoring information, pictures of regulation-violating vehicles breaching a red lamp, the number of vehicles passing a crossing each time a red lamp is being lightened, etc.) through video monitoring devices (e.g., video cameras, etc.), analyzes the collected information acquired by the IP-enabled field devices, and obtains the corresponding processing result (e.g., traffic flow information, the distance over vehicles extend on a road segment with a traffic jam each time a red lamp is being lightened, etc.), and the control server stores the collected information acquired by the IP-enabled field devices, and the corresponding processing result on the control server A; and if the control server A detects that the amount of the stored information acquired by the IP-enabled field devices, and corresponding processing result is above the preset threshold M, then the control server A will return the locally stored information acquired by the IP-enabled field devices, and corresponding processing result to the central system, where the value of M can be any value taken as needed.

In a fourth scenario, if there is an urgent event occurring around the control server, then the control server will return the information acquired by the IP-enabled field devices, and the corresponding processing result to the central system.

Particularly if there is an urgent event occurring around the control server, for example, the central system is notified by an administrator, and determines there is an urgent event occurring in its service area, e.g., "control deployment for arresting", "an ambulance passing", or another urgent event, then the respective control servers will return the information acquired by the IP-enabled field devices, and the corresponding processing results to the central system.

For example, if the central system is notified by the administrator that there is an ambulance passing in the service area, and there is a traffic jam on a road segment passed by the ambulance, then the central system will obtain the information acquired by the IP-enabled field devices, and the corresponding processing results, of the respective control servers, and adjust the traffic to thereby ensure timely arrival of the ambulance at a destination.

In another example, the central system receives a "Control deployment for arresting" command issued by the administrator, where "Control deployment for arresting" can further include "Search for a suspicious vehicle involved in a case", "Search for a vehicle with a falsified license plate", etc.

Particularly if the central system receives "Search for a suspicious vehicle involved in a case" in the "Control deployment for arresting" command issued by the administrator, then the central system will distribute subscription messages to the respective control servers in the service area, where the subscription messages can include "the picture of a license plate number of the vehicle", "the name of a road on which the vehicle is traveling", "the particular time when the vehicle passes", "the image of the face of a driver of the vehicle", etc., and the respective control servers will return the corresponding information acquired by the IP-enabled field devices, and the corresponding processing results to the central system in response to the obtained subscription messages to thereby ensure timely resolving of the urgent event of "Search for a suspicious vehicle involved in a case".

If the central system receives "Search for a vehicle with a falsified license plate" in the "Control deployment for arresting" command issued by the administrator, then the central system will distribute subscription messages to the respective control servers in the service area, where the subscription messages can include "the picture of a license plate number of the vehicle", "the name of a road on which the vehicle is traveling", "the particular time when the vehicle passes", etc., and if the central system determines that there are vehicles with the same license plate number occurring on at least two road segments at the same time, according to the information acquired by the IP-enabled field devices, and the corresponding processing results, returned by the respective control servers, then central server will determine that a vehicle with a falsified license plate is detected, to thereby ensure timely resolving of the urgent event of "Search for a vehicle with a falsified license plate".

In the step 405, the central system receives the information acquired by the IP-enabled field devices, and the corresponding processing results, returned by the control servers.

The central system receives the information acquired by the IP-enabled field devices, and the corresponding processing results, returned by the control servers, where the information acquired by the IP-enabled field devices, and the corresponding processing results are returned by the control servers to the central system upon determining that a preset condition is satisfied (for example, there is a traffic jam occurring around the controller server, there is a traffic accident occurring around the controller server, the amount of the information acquired by the IP-enabled field devices, and the corresponding processing result stored in the control server is above a preset threshold, there is an urgent event occurring around the control server, etc.).

Here the preset condition includes but will not be limited to the following four scenarios, and any combination thereof:
In a first scenario, the control server returns the information acquired by the IP-enabled field devices, and the corresponding processing result to the central system upon determining a traffic jam occurring around the controller server.

Particularly if the control server analyzes the collected information acquired by the IP-enabled field devices, obtains the corresponding processing result, and determines that there is a traffic jam occurring around the control server, then control server will return the information acquired by the IP-enabled field devices, and the corresponding processing result to the central system.

In a second scenario, the control server returns the information acquired by the IP-enabled field devices, and the corresponding processing result to the central system upon determining a traffic accident occurring around the controller server.

Particularly if the control server analyzes the collected information acquired by the IP-enabled field devices, obtains the corresponding processing result, and determines that there is a traffic accident occurring around the control server, then control server will return the information acquired by the IP-enabled field devices, and the corresponding processing result to the central system.

In a third scenario, the control server returns the information acquired by the IP-enabled field devices, and the corresponding processing result to the central system upon determining that the amount of the information acquired by the IP-enabled field devices, and the corresponding processing result is above a preset threshold.

Particularly the control server returns the locally stored information acquired by the IP-enabled field devices, and corresponding processing result to the central system upon detecting that the amount of the locally stored information acquired by the IP-enabled field devices, and corresponding processing result is above the preset threshold M1, where the value of M1 can be any value taken as needed.

In a fourth scenario, the control server returns the information acquired by the IP-enabled field devices, and the corresponding processing result to the central system upon determining an urgent event occurring around the controller server. Reference can be made to the step 404 for details thereof, so a repeated description thereof will be omitted here.

In the step 406, the central system analyzes the obtained information acquired by the IP-enabled field devices, and the corresponding processing results, returned by specified ones of the control servers through cloud computing, and generates a corresponding coordinated control strategy based upon a result of analyzing.

The analysis through cloud computing refers to that the central system obtains the information acquired by the IP-enabled field devices, and the corresponding processing results, returned by any number of specified control servers (which are a part of the specified control servers, or are all the specified control servers), analyze the obtained information acquired by the respective IP-enabled field devices, and corresponding processing results as a whole, obtain the result of analyzing, and generate the coordinated control strategy for the specified control servers based upon the result of analyzing.

Particularly the central system analyzes the obtained information acquired by the IP-enabled field devices, and corresponding processing results, returned by the specified control servers in response to the subscription messages, through cloud computing, obtains the result of analyzing, and generates the corresponding coordinated control strategy for the specified control servers based upon the result of analyzing.

For example, the central system obtains the information acquired by the IP-enabled field devices, and the corresponding processing result of the control server A (e.g., video monitoring information, vehicle flow information, etc.), the information acquired by the IP-enabled field devices, and the corresponding processing result of the control server B (e.g., vehicle speed information, passerby flow information, etc.), and the central system analyzes the obtained information acquired by the IP-enabled field devices, and corresponding processing results, of the control server A and the control server B through cloud computing, and generates the corresponding coordinated control strategy for the control server A and the control server B based upon the result of analyzing.

In the step 407, the central system issues the generated coordinated control strategy to the corresponding control servers.

The central system issues the coordinated control strategy generated based upon the information acquired by the IP-enabled field devices, and the corresponding processing results, returned by the specified control servers respectively to the specified control servers.

In the step 408, the control servers receive and enforce the coordinated control strategy issued by the central system.

The control servers and enforce the coordinated control strategy issued by the central system, where the coordinated control strategy is generated by the central system based upon the information acquired by the IP-enabled field devices, and the corresponding processing results, returned by the specified control servers.

If the coordinated control strategy generated by the central system for the specified control servers fails to be enforced, then the central system will be notified, so that the central system will obtain newly the information acquired by the IP-enabled field devices, and the corresponding processing results, returned by the specified control servers, analyze all the newly obtained information acquired by the IP-enabled field devices, and corresponding processing results through cloud computing, and generate a corresponding optimized coordinated control strategy for the specified control servers based upon a result of analyzing.

An intelligent traffic cloud control system including at least a plurality of control servers, and a plurality of IP-enabled field devices, where a first node is a first control server, according to an embodiment of the invention will be described below in details with reference to the drawings.

In a real application, the control servers each are configured to centrally process data acquired by the IP-enabled field devices, and to control traffic in a local area through edge computing, and/or

The control servers each are configured to determine that a preset trigger condition is satisfied, so that if the control server is a master central system in a pre-created customized area including the control server, then the master control server will generate a coordinated control strategy through self-learning and edge computing, and to perform coordinated control in the customized area; and if the control server is a slave control server, then the slave control server will retrieve a coordinated control strategy from a master control server through cloud computing.

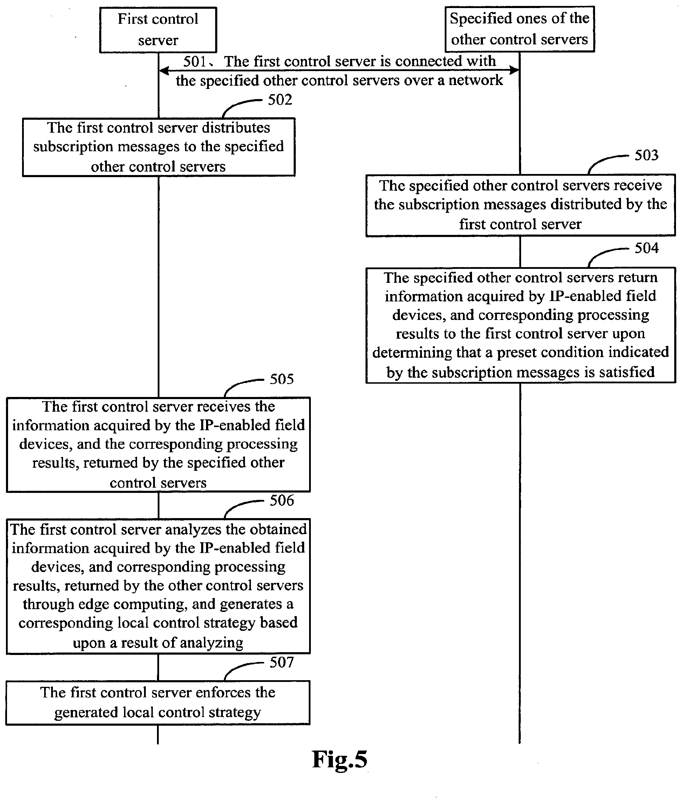

Referring to Fig.5, in an embodiment of the invention, if the first node is a first control server, then a detailed flow diagram in which an intelligent traffic cloud control system processes information will be as illustrated in Fig.5.

In the step 501, the first control server is connected with the other respective control servers over a network.

In the step 502, the first control server distributes a subscription message to specified one of the other control servers.

If the first node is one of the control servers, then the control server will distribute subscription messages to specified one of the other control servers (simply referred below to as the other control servers) to instruct the other servers to return information acquired by IP-enabled field devices, and corresponding processing results, which are relatively detailed and pertinent, and which can particularly include "a vehicle flow", and "a passerby flow", and can further include "the name of a road segment with a traffic jam", "the number of failing cameras", "the number of failing traffic lamps", "the number of traffic lamps in the road segment with a traffic jam, and the lengths of time for which they are being switched on or off", and other particular information, and the first control server analyzes on obtained information acquired by IP-enabled field devices, and corresponding processing results, returned by the other control servers, and generate a local control strategy based upon a result of analyzing.

Here the specified other control server is any one of the control servers in the intelligent traffic cloud control system, and the first control server is also any one of the control servers in the intelligent traffic cloud control system, so apparently the control servers in the intelligent traffic cloud control system can share information between them.

The first control server distributes corresponding subscription messages respectively to the other control servers based upon different conditions of the other control servers (e.g., geographical positions, surrounding traffic conditions, node types of the control servers, etc.) to instruct the control servers to return information acquired by IP-enabled field device, and corresponding processing results to the first control server upon determining that a preset condition is satisfied.

Particularly there are but will not be limited to the following three scenarios:
In a first scenario, the first control server distributes the corresponding subscription messages respectively to the respective other control servers based upon different geographical positions of the respective other control servers.

Particularly the first control server distributes the corresponding subscription messages respectively to the respective other control servers according to the different geographical positions of the respective other control servers (e.g., central urban positions, suburbia regions, etc.), where message contents of the subscription messages can vary with the different geographical positions of the other control servers.

In a second scenario, the first control server distributes the corresponding subscription messages respectively to the respective other control servers based upon different surrounding traffic conditions of the respective other control servers.

Particularly the first control server distributes the corresponding subscription messages respectively to the respective other control servers according to the different surrounding traffic conditions of the respective other control servers (e.g., a good traffic condition, a poor traffic condition, etc.), where message contents of the subscription messages can vary with the different surrounding traffic conditions of the other control servers.

In a third scenario, the first control server distributes the corresponding subscription messages respectively to the respective other control servers based upon different node types of the respective other control servers.

Particularly the first control server distributes the corresponding subscription messages respectively to the respective other control servers according to the different node types of the respective other control servers, where message contents of the subscription messages can vary with the different node types of the other control servers.

In the step 503, the other control servers receive the subscription messages distributed by the first control server.

The other control servers receive the subscription message distributed by the first control server based upon the different conditions of the other control servers (e.g., geographical positions, surrounding traffic conditions, node types of the control servers, etc.). Reference can be made to the step 502 for details thereof, so a repeated description thereof will be omitted here.

In the step 504, the other control server return information acquired by IP-enabled field devices, and corresponding processing results to the first control server upon determining that a preset condition indicated by the subscription messages is satisfied.

The other control servers return the locally acquired information acquired by the IP-enabled field devices, and the corresponding processing results to the first control server upon determining that the preset condition indicated by the subscription messages is satisfied (for example, upon determining that there is a traffic jam or a traffic accident occurring around the control servers, the amounts of the information acquired by the IP-enabled field devices, and the corresponding processing results stored in the control servers are above a preset threshold, or there is an urgent event occurring around the control servers), where the information items of the information acquired by the IP-enabled field devices, and the corresponding processing result are indicated by the subscription messages.

Particularly there are but will not be limited to the following four scenarios, and any combination thereof:
In a first scenario, if there is a traffic jam occurring around the other control server, then the other control server will return the information acquired by the IP-enabled field devices, and the corresponding processing result to the first control server.

For example, the other control server collects the information acquired by the IP-enabled field devices through video monitoring devices, analyzes the collected information acquired by the IP-enabled field devices, and obtains the corresponding processing result, and if the other control server determines a traffic jam occurring around the control server according to the obtained information acquired by the IP-enabled field devices, and corresponding processing result, then the other control server will return the information acquired by the IP-enabled field devices, and the corresponding processing result to the first control server.

In a second scenario, if there is a traffic accident occurring around the other control server, then the other control server will return the information acquired by the IP-enabled field devices, and the corresponding processing result to the first control server.

For example, the other control server collects the information acquired by the IP-enabled field devices through video monitoring devices, analyzes the collected information acquired by the IP-enabled field devices, and obtains the corresponding processing result, and if the other control server determines a traffic accident occurring around the control server according to the obtained information acquired by the IP-enabled field devices, and corresponding processing result, then the other control server will return the information acquired by the IP-enabled field devices, and the corresponding processing result to the first control server.

In a third scenario, if the amount of the information acquired by the IP-enabled field devices, and the corresponding processing result stored in the other control server is above a preset threshold, then the other control server will return the information acquired by the IP-enabled field devices, and the corresponding processing result to the first control server.

For example, the other control server collects the information acquired by the IP-enabled field devices through video monitoring devices, analyzes the collected information acquired by the IP-enabled field devices, and obtains the corresponding processing result, and the other control server stores locally the collected information acquired by the IP-enabled field devices, and the corresponding processing result; and if the other control server detects that the amount of the information acquired by the IP-enabled field devices, and the corresponding processing result is above the preset threshold M2, then the other control server will return the locally stored information acquired by the IP-enabled field devices, and corresponding processing result to the first control server, where the value of M2 can be any value taken as needed.

In a fourth scenario, if there is an urgent event occurring around the other control server, then the other control server will return the information acquired by the IP-enabled field devices, and the corresponding processing result to the first control server.

Particularly if there is an urgent event occurring around the other control server, for example, the central system is notified by an administrator, and determines there is an urgent event occurring in its service area, e.g., "control deployment for arresting", "an ambulance passing", or another urgent event, then the other control server will return the information acquired by the IP-enabled field devices, and the corresponding processing results to the first control server.

For example, if the first control server is notified by the administrator that there is an ambulance passing in the service area, and there is a traffic jam on a road segment passed by the ambulance, then the first control server will obtain the information acquired by the IP-enabled field devices, and the corresponding processing result of the other control server, and adjust the traffic to thereby ensure timely arrival of the ambulance at a destination.

In another example, the first control server receives a "Control deployment for arresting" command issued by the administrator, where "Control deployment for arresting" can further include "Search for a suspicious vehicle involved in a case", "Search for a vehicle with a falsified license plate", etc.

Particularly if the first control server receives "Search for a suspicious vehicle involved in a case" in the "Control deployment for arresting" command issued by the administrator, then the first control server will distribute subscription messages to the respective control servers in the service area, where the subscription messages can include "the picture of a license plate number of the vehicle", "the name of a road on which the vehicle is traveling", "the particular time when the vehicle passes", "the image of the face of a driver of the vehicle", etc., and the other control servers will return the corresponding information acquired by the IP-enabled field devices, and the corresponding processing results to the first control server in response to the obtained subscription messages to thereby ensure timely resolving of the urgent event of "Search for a suspicious vehicle involved in a case".

If the first control server receives "Search for a vehicle with a falsified license plate" in the "Control deployment for arresting" command issued by the administrator, then the first control server will distribute subscription messages to the respective control servers in the service area, where the subscription messages can include "the picture of a license plate number of the vehicle", "the name of a road on which the vehicle is traveling", "the particular time when the vehicle passes", etc., and if the first control server determines that there are vehicles with the same license plate number occurring on at least two road segments at the same time, according to the information acquired by the IP-enabled field devices, and the corresponding processing results, returned by the other control servers, then central server will determine that a vehicle with a falsified license plate is detected, to thereby ensure timely resolving of the urgent event of "Search for a vehicle with a falsified license plate".

In the step 505, the first control server receives the information acquired by the IP-enabled field devices, and the corresponding processing results, returned by the other control servers.

The first control server receives the information acquired by the IP-enabled field devices, and the corresponding processing results, returned by the other control servers, where the information acquired by the IP-enabled field devices, and the corresponding processing results are returned by the other control servers to the first control server upon determining that a preset condition is satisfied (for example, there is a traffic jam occurring around the controller server, there is a traffic accident occurring around the controller server, the amount of the information acquired by the IP-enabled field devices, and the corresponding processing result stored in the other control server is above a preset threshold, there is an urgent event occurring around the other control server, etc.). Reference can be made to the step 504 for details thereof, so a repeated description thereof will be omitted here.

In the step 506, the first control server analyzes the obtained information acquired by the IP-enabled field devices, and corresponding processing results, returned by the other control servers through edge computing, and generates a corresponding local control strategy based upon a result of analyzing.

The analysis through edge computing refers to that the first control server obtains the information acquired by the IP-enabled field devices, and the corresponding processing results, returned by the respective other control servers as needed for use by the first control server, analyze the obtained information acquired by the respective IP-enabled field devices, and corresponding processing results, returned by the other control servers, obtain the result of analyzing, and generate the corresponding local control strategy based upon the result of analyzing.

In the step 507, the first control server enforces the generated local control strategy.

The first control server enforces the local control strategy generated based upon the information acquired by the respective IP-enabled field devices, and the corresponding processing results, returned by the other control servers

If the first control server fails to enforce the local control strategy, then the central system will be notified, so that the central system will obtain the latest information acquired by the IP-enabled field devices, and corresponding processing results of by the other control servers, analyze the newly obtained information acquired by the IP-enabled field devices, and corresponding processing results through cloud computing, generate a corresponding optimized strategy for the first control server based upon a result of analyzing, and issue the optimized strategy to the first control server, that is, if the first control server fails to manage itself, then it will be managed instead by the central system.

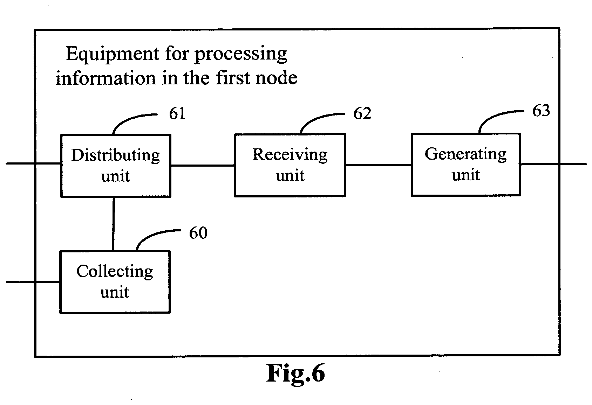

Referring to Fig.6, there is provided an equipment for processing information in an intelligent traffic cloud control system including at least a plurality of control servers, and a plurality of IP-enabled field devices, or at least a plurality of control servers, a plurality of IP-enabled field devices, and a central system, where the central system is connected with the control servers over a network, and the IP-enabled field devices are connected with the control servers over IP address based broadband buses; and the equipment includes at least a collecting unit 60, a distributing unit 61, a receiving unit 62, and a generating unit 63, where:
The distributing unit 61 is configured to distribute subscription messages to the control servers to instruct the control servers to return information acquired by IP-enabled field device local to the control servers, and corresponding processing results to the first node upon determining that a preset condition is satisfied, where the first node is the central system, or any one of the control servers;
The receiving unit 62 is configured to receive the information acquired by the IP-enabled field devices, and the corresponding processing results, returned by the control servers; and
The generating unit 63 is configured to analyze the obtained information acquired by the IP-enabled field devices, and corresponding processing results, and to generate a corresponding control strategy based upon a result of analyzing.

Optionally before the subscription messages are distributed to the respective control servers, the equipment further includes:
The collecting unit 60 is configured to collect and store the local information acquired by the IP-enabled field devices, and corresponding processing results.

The distributing unit 61 configured to distribute the subscription messages to the control servers is configured:
If the equipment is the central system, to distribute the subscription messages to all the control servers; and
If the equipment is one of the control servers, to distribute the subscription messages to specified ones of the other control servers.

The distributing unit 61 configured to distribute a subscription message to one of the control servers is further configured:
To distribute the corresponding subscription message to the one control server based upon the geographical position of the one control server; or
To distribute the corresponding subscription message to the one control server based upon a surrounding traffic condition of the one control server; or
To distribute the corresponding subscription message to the one control server based upon the node type of the one control server.

The receiving unit 62 configured to receive information acquired by IP-enabled field devices, and a corresponding processing result, returned by one of the control servers is configured:
To receive the information acquired by the IP-enabled field devices, and the corresponding processing result, returned by the one control server, where the information acquired by the IP-enabled field devices, and the corresponding processing result is transmitted by the one control server to the first node upon determining that the preset condition is satisfied;
Where the preset condition includes one or any combination of the following conditions:
   That there is a traffic jam occurring around the one control server;
   That there is a traffic accident occurring around the one control server;
   That the amount of the information acquired by the IP-enabled field devices, and the corresponding processing result stored in the one control server is above a preset threshold; and
   There is an urgent event occurring around the one control server or the first node.

The generating unit 63 configured to analyze the obtained information acquired by the IP-enabled field devices, and corresponding processing results, and to generate the corresponding control strategy based upon the result of analyzing is configured:
If the equipment is the central system, to analyze the obtained information acquired by the IP-enabled field devices, and corresponding processing results, returned by the respective control servers through cloud computing, and to generate a corresponding coordinated control strategy based upon the result of analyzing; and
If the equipment is one of the control servers, to analyze the obtained information acquired by the IP-enabled field devices, and corresponding processing results, returned by the respective control servers through cloud computing, and to generate a local control strategy based upon the result of analyzing.

Optionally the generating unit 63 is further configured:
If it is determined that the generated control strategy fails to be enforced, to notify the central system, so that the central system newly collects corresponding information acquired by the IP-enabled field devices, and corresponding processing results for the control strategy, and generates a corresponding optimized strategy.

In summary, in the embodiments of the invention, in order to process the data information in the intelligent traffic cloud control system, the first node distributes the subscription messages respectively to the control servers, and the control servers receive the subscription messages distributed by the first node; and the control servers return the information acquired by the IP-enabled field devices, and the corresponding processing results, indicated by the subscription message to the first node upon determining that the preset condition indicated by the subscription messages is satisfied, and the first node analyzes the returned information acquired by the IP-enabled field devices, and corresponding processing results, and generates the corresponding coordinated control strategy or the local control strategy based upon the result of analyzing. If the first node is the central system, then the central system will issue the generated coordinated control strategy to the corresponding control servers; and if the first node is the first control server, then the first control server will enforce the generated local control strategy.

With the method above for processing information, the respective control servers acquire and store the information acquired by the IP-enabled field devices, and the corresponding processing results to thereby store the information in a distributed mode. The control servers will return the information acquired by the IP-enabled field devices, and the corresponding processing results, indicated by the subscription messages to the first node only upon determining that the preset condition indicated by the subscription messages is satisfied, thus lowering the amount of information transmitted throughout the intelligent traffic cloud control system so as to ensure the efficiency of transmission in the system.

On the other hand, in the method above for processing information, if the first node is the central system, then the central system will generate the corresponding coordinated control strategy for specified ones of the control servers to thereby improve the effect of adjusting a traffic road condition in some area while lowering the amount of stored information, and the workload of calculation in the central system; and if the first node is the first control server, then the first control server will obtain the information acquired by the IP-enabled field devices, and the corresponding processing results, of any specified one of other control servers, so that the first control server can manage itself to thereby lower the workload of information calculation in the central system, and also enable the information to be shared among the respective control servers. In this method for processing information, the message subscription and distribution mechanisms, and the distributed data storage and sharing, cloud computing, edge computing, and other technologies can be applied in combination to enable the field control servers to store the local data, and the central system to subscribe to the data so as to provide the solution to reasonable storage, rapid sharing, and real-time processing of the data in the traffic system.

Those skilled in the art shall appreciate that the embodiments of the invention can be embodied as a method, a system or a computer program product. Therefore the invention can be embodied in the form of an all-hardware embodiment, an all-software embodiment or an embodiment of software and hardware in combination. Furthermore the invention can be embodied in the form of a computer program product embodied in one or more computer useable storage mediums (including but not limited to a disk memory, a CD-ROM, an optical memory, etc.) in which computer useable program codes are contained.

The invention has been described in a flow chart and/or a block diagram of the method, the device (system) and the computer program product according to the embodiments of the invention. It shall be appreciated that respective flows and/or blocks in the flow chart and/or the block diagram and combinations of the flows and/or the blocks in the flow chart and/or the block diagram can be embodied in computer program instructions. These computer program instructions can be loaded onto a general-purpose computer, a specific-purpose computer, an embedded processor or a processor of another programmable data processing device to produce a machine so that the instructions executed on the computer or the processor of the other programmable data processing device create means for performing the functions specified in the flow(s) of the flow chart and/or the block(s) of the block diagram.

These computer program instructions can also be stored into a computer readable memory capable of directing the computer or the other programmable data processing device to operate in a specific manner so that the instructions stored in the computer readable memory create an article of manufacture including instruction means which perform the functions specified in the flow(s) of the flow chart and/or the block(s) of the block diagram.

These computer program instructions can also be loaded onto the computer or the other programmable data processing device so that a series of operational steps are performed on the computer or the other programmable data processing device to create a computer implemented process so that the instructions executed on the computer or the other programmable device provide steps for performing the functions specified in the flow(s) of the flow chart and/or the block(s) of the block diagram.

## Claims

1. A method for processing information in an intelligent traffic control system based on cloud computing comprising at least a plurality of control servers, and a plurality of IP-enabled field devices, or at least a plurality of control servers, a plurality of IP-enabled field devices, and a central system, wherein the central system is connected with the control servers over a network, and the IP-enabled field devices are connected with the control servers over IP address based broadband buse wherein the method comprises:
distributing (402,502), by a first node, subscription messages to the control servers to instruct the control servers to return, by transmission, information acquired by the IP-enabled field devices local to the control servers, and corresponding processing results to the first node upon determining that a preset condition indicated by the subscription messages is satisfied, wherein the first node is the central system, or any one of the control servers; wherein the IP-enabled field device refers to a device, distributed at a respective traffic crossing, configured to acquire data of the traffic crossing, to monitor and control in real time a traffic condition at the traffic crossing;
receiving (405,505), by the first node, the information acquired by the IP-enabled field devices, and the corresponding processing results, returned by the control servers; and
analyzing (406, 506), by the first node, the obtained information acquired by the IP-enabled field devices, and corresponding processing results, generating (506) a corresponding control strategy based upon a result of analyzing, and enforcing (507) the generated control strategy in a case that the first node is the any one of the control servers, or issuing (407) the generated control strategy to a corresponding control server in a case that the first node is the central system, so that the corresponding control server receives and enforces (408) the generated control strategy;
wherein whether the preset condition is satisfied is determined by any one of the control servers after the any one of the control servers analyzes information acquired by one or more corresponding IP-enabled field devices;
wherein the preset condition comprises one or any combination of the following conditions:
that there is a traffic jam occurring around the one control server;
that there is a traffic accident occurring around the one control server;
that the amount of the information acquired by the IP-enabled field devices, and the corresponding processing result stored in the one control server is above a preset threshold; and
that there is an urgent event occurring around the one control server or the first node.

2. The method according to claim 1, wherein before the first node distributes the subscription messages to the respective control servers, the method further comprises:
collecting and storing, by the respective control servers, the information acquired by the IP-enabled field devices local to the respective control servers, and corresponding processing results.

3. The method according to claim 1, wherein distributing, by the first node, the subscription messages to the control servers comprises:
if the first node is the central system, then distributing, by the first node, the subscription messages to all the control servers; and
if the first node is one of the control servers, then distributing, by the first node, the subscription messages to specified ones of the other control servers.

4. The method according to claim 3, wherein distributing, by the first node, a subscription message to one of the control servers comprises:
distributing, by the first node, the corresponding subscription message to the one control server based upon the geographical position of the one control server; or
distributing, by the first node, the corresponding subscription message to the one control server based upon a surrounding traffic condition of the one control server; or
distributing, by the first node, the corresponding subscription message to the one control server based upon the node type of the one control server.

5. The method according to any one of claims 1 to 4, wherein analyzing, by the first node, the obtained information acquired by the IP-enabled field devices, and corresponding processing results, and generating the corresponding control strategy based upon the result of analyzing comprises:
if the first node is the central system, then analyzing, by the first node, the obtained information acquired by the IP-enabled field devices, and corresponding processing results, returned by the respective control servers through cloud computing, and generating a corresponding coordinated control strategy based upon the result of analyzing; and
If the first node is one of the control servers, then analyzing, by the first node, the obtained information acquired by the IP-enabled field devices, and corresponding processing results, returned by the respective control servers through edge computing, and generating a corresponding local control strategy based upon the result of analyzing;

6. The method according to claim 5, wherein the method further comprises:
if the first node determines that the generated control strategy fails to be enforced, then notifying the central system, so that the central system newly collects corresponding information acquired by the IP-enabled field devices, and corresponding processing results for the control strategy, and generates a corresponding optimized strategy.

7. An equipment for processing information in an intelligent traffic control system based on cloud computing comprising at least a plurality of control servers, and a plurality of IP-enabled field devices, or at least a plurality of control servers, a plurality of IP-enabled field devices, and a central system, where the central system is connected with the control servers over a network, and the IP-enabled field devices are connected with the control servers over IP address based broadband buses; wherein the equipment comprises:
a distributing unit (61) configured to distribute subscription messages to the control servers to instruct the control servers to return, by transmission, information acquired by the IP-enabled field devices local to the control servers, and corresponding processing results to the first node upon determining that a preset condition indicated by the subscription messages is satisfied, where the first node is the central system, or any one of the control servers; wherein the IP-enabled field device refers to a device, distributed at a respective traffic crossing, configured to acquire data of the traffic crossing, to monitor and control in real time a traffic condition at the traffic crossing;
a receiving unit (62) configured to receive the information acquired by the IP-enabled field devices, and the corresponding processing results, returned by the control servers; and
a generating unit (63) configured to analyze the obtained information acquired by the IP-enabled field devices, and corresponding processing results, to generate a corresponding control strategy based upon a result of analyzing, and to enforce the generated control strategy in a case that the first node is the any one of the control servers, or issue the generated control strategy to a corresponding control server in a case that the first node is the central system, so that the corresponding control server receives and enforces the generated control strategy;
wherein whether the preset condition is satisfied is determined by any one of the control servers after the any one of the control servers analyzes information acquired by one or more corresponding IP-enabled field devices;
wherein the preset condition comprises one or any combination of the following conditions:
that there is a traffic jam occurring around the one control server;
that there is a traffic accident occurring around the one control server;
that the amount of the information acquired by the IP-enabled field devices, and the corresponding processing result stored in the one control server is above a preset threshold; and
that there is an urgent event occurring around the one control server or the first node.

8. The equipment according to claim 7, wherein before the subscription messages are distributed to the respective control servers, the equipment further comprises:
a collecting unit (60) configured to collect and store the information acquired by the IP-enabled field devices local to the respective control servers, and corresponding processing results.

9. The equipment according to claim 7, wherein the distributing unit (61) configured to distribute the subscription messages to the control servers is configured:
if the equipment is the central system, to distribute the subscription messages to all the control servers; and
if the equipment is one of the control servers, to distribute the subscription messages to specified ones of the other control servers.

10. The equipment according to claim 9, wherein the distributing unit (61) configured to distribute a subscription message to one of the control servers is further configured:
to distribute the corresponding subscription message to the one control server based upon the geographical position of the one control server; or
to distribute the corresponding subscription message to the one control server based upon a surrounding traffic condition of the one control server; or
to distribute the corresponding subscription message to the one control server based upon the node type of the one control server.

11. The equipment according to any one of claims 7 to 10, wherein the generating unit (63) configured to analyze the obtained information acquired by the IP-enabled field devices, and corresponding processing results, and to generate the corresponding control strategy based upon the result of analyzing is configured:
if the equipment is the central system, to analyze the obtained information acquired by the IP-enabled field devices, and corresponding processing results, returned by the respective control servers through cloud computing, and to generate a corresponding coordinated control strategy based upon the result of analyzing; and
if the equipment is one of the control servers, to analyze the obtained information acquired by the IP-enabled field devices, and corresponding processing results, returned by the respective control servers through edge computing, and to generate a corresponding local control strategy based upon the result of analyzing.

12. The equipment according to claim 11, wherein the generating unit (63) is further configured:
if it is determined that the generated control strategy fails to be enforced, to notify the central system, so that the central system newly collects corresponding information acquired by the IP-enabled field devices, and corresponding processing results for the control strategy, and generates a corresponding optimized strategy.

## Patentansprüche

1. Verfahren zum Verarbeiten von Informationen in einem intelligenten Verkehrssteuerungssystem auf Basis von Cloud-Computing, zumindest eine Mehrzahl von Steuerungs-Servern und eine Mehrzahl von IP-fähigen Feldgeräten oder zumindest eine Mehrzahl von Steuerungs-Servern, eine Mehrzahl von IP-fähigen Feldgeräten und ein zentrales System umfassend, wobei das zentrale System mit den Steuerungs-Servern über ein Netz verbunden ist und die IP-fähigen Feldgeräte mit den Steuerungs-Servern über auf IP-Adressen basierenden Breitbandbussen verbunden sind: wobei das Verfahren umfasst:
Verteilen (402, 502) von Subskriptionsnachrichten an die Steuerungs-Server durch einen ersten Knoten, um die Steuerungs-Server anzuweisen, Informationen, die von den an den Steuerungs-Servern lokalisierten IP-fähigen Feldgeräten erfasst wurden, und entsprechende Verarbeitungsergebnisse als Sendung zurück an den ersten Knoten zurückzuschicken, sobald bestimmt wird, dass eine in den Subskriptionsnachrichten angegebene voreingestellte Bedingung erfüllt ist, wobei der erste Knoten das zentrale System oder irgendeiner von den Steuerungs-Servern ist; wobei das IP-fähige Feldgerät eine verteilte Vorrichtung an einer jeweiligen Verkehrskreuzung ist, die konfiguriert ist zur Erfassung von Daten der Verkehrskreuzung, um in Echtzeit eine Verkehrsbedingung an der Verkehrskreuzung zu überwachen und zu steuern;
Empfangen (405, 505) der von den IP-fähigen Feldgeräten erfassten Informationen und der entsprechenden Verarbeitungsergebnisse, die von den Steuerungs-Servern zurückgeschickt werden, an dem ersten Knoten; und
Analysieren (406, 506) der erhaltenen von den IP-fähigen Feldgeräten erfassten Informationen und entsprechenden Verarbeitungsergebnisse durch den ersten Knoten, Erzeugen (506) einer entsprechenden Steuerungsstrategie auf Basis eines Analyseergebnisses und Durchsetzen (507) der erzeugten Steuerungsstrategie in einem Fall, dass der erste Knoten der irgendeine von den Steuerungs-Servern ist, oder Ausgeben (407) der erzeugten Steuerungsstrategie an einen entsprechenden Steuerungs-Server in einem Fall, dass der erste Knoten das zentrale System ist, so dass der entsprechende Steuerungs-Server die erzeugte Steuerungsstrategie empfängt und durchsetzt (408);
wobei die Bestimmung, ob die voreingestellte Bedingung erfüllt ist, von irgendeinem der Steuerungs-Server getroffen wird, nachdem der irgendeine von den Steuerungs-Servern Informationen analysiert hat, die von einem oder mehreren entsprechenden IP-fähigen Feldgeräten erfasst wurden;
wobei die voreingestellte Bedingung eine oder irgendeine Kombination der folgenden Bedingungen umfasst:
dass sich ein Verkehrsstau im Umfeld des einen Steuerungs-Servers ereignet;
dass sich ein Verkehrsunfall im Umfeld des einen Steuerungs-Servers ereignet;
dass die Menge der von den IP-fähigen Feldgeräten erfassten Informationen und des entsprechenden Verarbeitungsergebnisses, die in dem einen Steuerungs-Server gespeichert ist, über einem voreingestellten Schwellenwert liegt; und
dass ein dringendes Ereignis im Umfeld des einen Steuerungs-Servers oder des ersten Knotens stattfindet.

2. Verfahren nach Anspruch 1, wobei das Verfahren ferner, bevor der erste Knoten die Subskriptionsnachrichten an die jeweiligen Steuerungs-Server verteilt, Folgendes umfasst:
Sammeln und Speichern der Informationen, die durch die an den jeweiligen Steuerungs-Servern lokalisierten IP-fähigen Feldgeräte erfasst wurden, und entsprechender Verarbeitungsergebnisse durch die jeweiligen Steuerungs-Server.

3. Verfahren nach Anspruch 1, wobei das Verteilen der Subskriptionsnachrichten an die Steuerungs-Server durch den ersten Knoten umfasst:
wenn der erste Knoten das zentrale System ist, dann Verteilen der Subskriptionsnachrichten durch den ersten Knoten an alle von den Steuerungs-Servern; und
wenn der erste Knoten einer von den Steuerungs-Servern ist, dann Verteilen der Subskriptionsnachrichten durch den ersten Knoten an spezifizierte einzelne von den anderen Steuerungs-Servern.

4. Verfahren nach Anspruch 3, wobei das Verteilen einer Subskriptionsnachricht durch den ersten Knoten an einen von den Steuerungs-Servern umfasst:
Verteilen der entsprechenden Subskriptionsnachricht durch den ersten Knoten an den einen Steuerungs-Server auf Basis der geografischen Position des einen Steuerungs-Servers; oder
Verteilen der entsprechenden Subskriptionsnachricht durch den ersten Knoten an den einen Steuerungs-Server auf Basis einer Verkehrsbedingung in der Umgebung des einen Steuerungs-Servers; oder
Verteilen der entsprechenden Subskriptionsnachricht durch den ersten Knoten an den einen Steuerungs-Server auf Basis des Knotentyps des einen Steuerungs-Servers.

5. Verfahren nach einem der Ansprüche 1 bis 4, wobei das Analysieren der erhaltenen von den IP-fähigen Feldgeräten erfassten Informationen und entsprechenden Verarbeitungsergebnisse durch den ersten Knoten und Erzeugen der entsprechenden Steuerungsstrategie auf Basis des Analyseergebnisses umfasst:
wenn der erste Knoten das zentrale System ist, dann Analysieren der erhaltenen von den IP-fähigen Feldgeräten erfassten Informationen und entsprechenden Verarbeitungsergebnisse, die von den entsprechenden Steuerungs-Servern zurückgeschickt werden, durch den ersten Knoten durch Cloud-Computing und Erzeugen einer entsprechenden koordinierten Steuerungsstrategie auf Basis des Analyseergebnisses; und
wenn der erste Knoten einer von den Steuerungs-Servern ist, dann Analysieren der erhaltenen von den IP-fähigen Feldgeräten erfassten Informationen und entsprechenden Verarbeitungsergebnisse, die von den entsprechenden Steuerungs-Servern zurückgeschickt werden, durch Edge-Computing und Erzeugen einer entsprechenden lokalen Steuerungsstrategie auf Basis des Analyseergebnisses;

6. Verfahren nach Anspruch 5, wobei das Verfahren ferner umfasst:
wenn der erste Knoten bestimmt, dass die erzeugte Steuerungsstrategie nicht durchgesetzt werden kann, dann Benachrichtigen des zentralen Systems, so dass das zentrale System entsprechende Informationen, die von den IP-fähigen Feldgeräten erfasst werden, und entsprechende Verarbeitungsergebnisse für die Steuerungsstrategie neu sammelt und eine entsprechende optimierte Strategie erzeugt.

7. Anlage zum Verarbeiten von Informationen in einem intelligenten Verkehrssteuerungssystem auf Basis von Cloud-Computing, zumindest eine Mehrzahl von Steuerungs-Servern und eine Mehrzahl von IP-fähigen Feldgeräten oder zumindest eine Mehrzahl von Steuerungs-Servern, eine Mehrzahl von IP-fähigen Feldgeräten und ein zentrales System umfassend, wobei das zentrale System mit den Steuerungs-Servern über ein Netz verbunden ist und die IP-fähigen Feldgeräte mit den Steuerungs-Servern über auf IP-Adressen basierenden Breitbandbussen verbunden sind; wobei die Anlage umfasst:
eine Verteilungseinheit (61), die konfiguriert ist, Subskriptionsnachrichten an die Steuerungs-Server zu verteilen, um die Steuerungs-Server anzuweisen, Informationen, die von den an den Steuerungs-Servern lokalisierten IP-fähigen Feldgeräten erfasst wurden, und entsprechende Verarbeitungsergebnisse als Sendung an den ersten Knoten zurückzuschicken, wenn bestimmt wird, dass eine in den Subskriptionsnachrichten angegebene voreingestellte Bedingung erfüllt ist, wobei der erste Knoten das zentrale System oder irgendeiner von den Steuerungs-Servern ist; wobei das IP-fähige Feldgerät eine verteilte Vorrichtung an einer jeweiligen Verkehrskreuzung bezeichnet, die konfiguriert ist zum Erfassen von Daten der Verkehrskreuzung, um in Echtzeit eine Verkehrsbedingung an der Verkehrskreuzung zu überwachen und zu steuern;
eine Empfangseinheit (62), die konfiguriert ist zum Empfangen der von den IP-fähigen Feldgeräten erfassten Informationen und der entsprechenden Verarbeitungsergebnisse, die von den Steuerungs-Servern zurückgeschickt werden; und
eine Erzeugungseinheit (63), die konfiguriert ist zum Analysieren der erhaltenen von den IP-fähigen Feldgeräten erfassten Informationen und entsprechenden Verarbeitungsergebnisse, zum Erzeugen einer entsprechenden Steuerungsstrategie auf Basis eines Analyseergebnisses und zum Durchsetzen der erzeugten Steuerungsstrategie in einem Fall, dass der erste Knoten irgendeiner von den Steuerungs-Servern ist, oder zum Ausgeben der erzeugten Steuerungsstrategie an einen entsprechenden Steuerungs-Server in einem Fall, dass der erste Knoten das zentrale System ist, so dass der entsprechende Steuerungs-Server die erzeugte Steuerungsstrategie empfängt und durchsetzt;
wobei die Bestimmung, ob die voreingestellte Bedingung erfüllt ist, von irgendeinem der Steuerungs-Server getroffen wird, nachdem der irgendeine von den Steuerungs-Servern Informationen analysiert hat, die von einem oder mehreren entsprechenden IP-fähigen Feldgeräten erfasst wurden;
wobei die voreingestellte Bedingung eine oder irgendeine Kombination der folgenden Bedingungen umfasst:
dass sich ein Verkehrsstau im Umfeld des einen Steuerungs-Servers ereignet;
dass sich ein Verkehrsunfall im Umfeld des einen Steuerungs-Servers ereignet;
dass die Menge der von den IP-fähigen Feldgeräten erfassten Informationen und des entsprechenden Verarbeitungsergebnisses, die in dem einen Steuerungs-Server gespeichert ist, über einem voreingestellten Schwellenwert liegt; und
dass ein dringendes Ereignis im Umfeld des einen Steuerungs-Servers oder des ersten Knotens stattfindet.

8. Anlage nach Anspruch 7, wobei die Anlage ferner, vor der Verteilung der Subskriptionsnachrichten an die jeweiligen Steuerungs-Server, umfasst:
eine Sammeleinheit (60), die konfiguriert ist zum Sammeln und Speichern der Informationen, die von den an den jeweiligen Steuerungs-Servern lokalisierten IP-fähigen Feldgeräten erfasst werden, und entsprechender Verarbeitungsergebnisse.

9. Anlage nach Anspruch 7, wobei die Verteilungseinheit (61), die konfiguriert ist, um die Subskriptionsnachrichten an die Steuerungs-Server zu verteilen, konfiguriert ist zum:
Verteilen der Subskriptionsnachrichten an alle Steuerungs-Server, wenn die Anlage das zentrale System ist; und
Verteilen der Subskriptionsnachrichten an spezifizierte einzelne von den anderen Steuerungs-Servern, wenn die Anlage einer von den Steuerungs-Servern ist.

10. Anlage nach Anspruch 9, wobei die Verteilungseinheit (61), die konfiguriert ist, um eine Subskriptionsnachricht an einen von den Steuerungs-Servern zu verteilen, ferner konfiguriert ist zum:
Verteilen der entsprechenden Subskriptionsnachricht an den einen Steuerungs-Server auf Basis der geografischen Position des einen Steuerungs-Servers; oder
Verteilen der entsprechenden Subskriptionsnachricht an den einen Steuerungs-Server auf Basis einer Verkehrsbedingung in der Umgebung des einen Steuerungs-Servers; oder
Verteilen der entsprechenden Subskriptionsnachricht an den einen Steuerungs-Server auf Basis des Knotentyps des einen Steuerungs-Servers.

11. Anlage nach einem der Ansprüche 7 bis 10, wobei die Erzeugungseinheit (63), die konfiguriert ist zum Analysieren der erhaltenen von den IP-fähigen Feldgeräten erfassten Informationen und entsprechenden Verarbeitungsergebnisse und zum Erzeugen der entsprechenden Steuerungsstrategie auf Basis des Analyseergebnisses, konfiguriert ist zum:
Analysieren der erhaltenen von den IP-fähigen Feldgeräten erfassten Informationen und entsprechenden Verarbeitungsergebnisse, die von den entsprechenden Steuerungs-Servern zurückgeschickt werden, durch Cloud-Computing und Erzeugen einer entsprechenden koordinierten Steuerungsstrategie auf Basis des Ergebnisses der Analyse, wenn die Anlage das zentrale System ist; und
Analysieren der erhaltenen von den IP-fähigen Feldgeräten erfassten Informationen und entsprechenden Verarbeitungsergebnisse, die von den entsprechenden Steuerungs-Servern zurückgeschickt werden, durch Edge-Computing und Erzeugen einer entsprechenden lokalen Steuerungsstrategie auf Basis des Ergebnisses der Analyse, wenn die Anlage einer von den Steuerungs-Servern ist.

12. Anlage nach Anspruch 11, wobei die Erzeugungseinheit (63) ferner konfiguriert ist zum:
Benachrichtigen des zentralen Systems, wenn bestimmt wird, dass die erzeugte Steuerungsstrategie nicht durchgesetzt werden kann, damit das zentrale System entsprechende Informationen, die von den IP-fähigen Feldgeräten erfasst werden, und entsprechende Verarbeitungsergebnisse für die Steuerungsstrategie neu sammelt und eine entsprechende optimierte Strategie erzeugt.

## Revendications

1. Procédé de traitement d'informations dans un système intelligent de contrôle du trafic basé sur l'informatique en nuage comprenant au moins une pluralité de serveurs de contrôle, et une pluralité de dispositifs de terrain IP, ou au moins une pluralité de serveurs de contrôle, une pluralité de dispositifs de terrain IP, et un système central, dans lequel le système central est connecté aux serveurs de contrôle sur un réseau, et les dispositifs de terrain IP sont connectés aux serveurs de contrôle sur une buse à large bande basée sur une adresse IP, dans lequel le procédé comprend les étapes consistant à :
distribuer (402, 502), par l'intermédiaire d'un premier noeud, des messages d'abonnement aux serveurs de contrôle pour ordonner aux serveurs de contrôle de renvoyer, par transmission, des informations acquises par les dispositifs de terrain IP locaux aux serveurs de contrôle, et des résultats de traitement correspondants au premier noeud lors de la détermination qu'une condition prédéfinie indiquée par les messages d'abonnement est satisfaite, dans lequel le premier noeud est le système central, ou un certain quelconque des serveurs de contrôle ; dans lequel le dispositif de terrain IP fait référence à un dispositif, distribué à un passage de trafic respectif, configuré pour acquérir des données du passage de trafic, pour surveiller et contrôler en temps réel une condition de trafic au niveau du passage de trafic ;
recevoir (405, 505), par l'intermédiaire du premier noeud, les informations acquises par les dispositifs de terrain IP, et les résultats de traitement correspondants, renvoyés par les serveurs de contrôle ; et
analyser (406, 506), par l'intermédiaire du premier noeud, les informations obtenues acquises par les dispositifs de terrain IP, et des résultats de traitement correspondants, générer (506) une stratégie de contrôle correspondante basée sur un résultat d'analyse, et appliquer (507) la stratégie de contrôle générée dans le cas où le premier noeud est un certain quelconque des serveurs de contrôle, ou émettre (407) la stratégie de contrôle générée vers un serveur de contrôle correspondant dans le cas où le premier noeud est le système central, de sorte que le serveur de contrôle correspondant reçoit et appliquer (408) la stratégie de contrôle générée ;
dans lequel que la condition prédéfinie soit satisfaite ou non est déterminé par l'un quelconque des serveurs de contrôle après que le certain quelconque des serveurs de contrôle analyse des informations acquises par un ou plusieurs dispositifs de terrain IP correspondants ;
dans lequel la condition prédéfinie comprend une ou une combinaison quelconque des conditions suivantes :
qu'il existe un embouteillage survenant autour du certain serveur de contrôle ;
qu'il existe un accident de trafic survenant autour du certain serveur de contrôle ;
que la quantité d'informations acquises par les dispositifs de terrain IP et le résultat de traitement correspondant stocké dans le certain serveur de contrôle soit supérieure à un seuil prédéfini ; et
qu'un événement urgent survienne autour du certain serveur de contrôle ou du premier noeud.

2. Procédé selon la revendication 1, dans lequel avant que le premier noeud ne distribue les messages d'abonnement aux serveurs de contrôle respectifs, le procédé comprend en outre les étapes consistant à :
collecter et stocker, par l'intermédiaire des serveurs de contrôle respectifs, les informations acquises par les dispositifs de terrain IP locaux aux serveurs de contrôle respectifs, et des résultats de traitement correspondants.

3. Procédé selon la revendication 1, dans lequel la distribution, par l'intermédiaire du premier noeud, des messages d'abonnement aux serveurs de contrôle comprend les étapes consistant à :
si le premier noeud est le système central, alors distribuer, par l'intermédiaire du premier noeud, les messages d'abonnement à tous les serveurs de contrôle ; et
si le premier noeud est le certain des serveurs de contrôle, alors distribuer, par l'intermédiaire du premier noeud, les messages d'abonnement à certains spécifiés des autres serveurs de contrôle.

4. Procédé selon la revendication 3, dans lequel la distribution, par l'intermédiaire du premier noeud, des messages d'abonnement à un certain des serveurs de contrôle comprend les étapes consistant à :
distribuer, par l'intermédiaire du premier noeud, le message d'abonnement correspondant au certain serveur de contrôle en fonction de la position géographique du certain serveur de contrôle ; ou
distribuer, par l'intermédiaire du premier noeud, le message d'abonnement correspondant au certain serveur de contrôle en fonction d'une condition de trafic environnante du certain serveur de contrôle ; ou
distribuer, par l'intermédiaire du premier noeud, le message d'abonnement correspondant au serveur de contrôle en fonction du type de noeud du certain serveur de contrôle.

5. Procédé selon l'une quelconque des revendications 1 à 4, dans lequel l'analyse, par l'intermédiaire du premier noeud, des informations obtenues acquises par les dispositifs de terrain IP, et des résultats de traitement correspondants, et la génération de la stratégie de contrôle correspondante sur la base du résultat de l'analyse comprend les étapes consistant à :
si le premier noeud est le système central, alors analyser, par l'intermédiaire du premier noeud, les informations obtenues acquises par les dispositifs de terrain IP, et des résultats de traitement correspondants, renvoyés par les serveurs de contrôle respectifs via l'informatique en nuage, et générer une stratégie de contrôle coordonnée correspondante basée sur le résultat de l'analyse ; et
si le premier noeud est un certain de serveurs de contrôle, alors analyser, par l'intermédiaire du premier noeud, les informations obtenues acquises par les dispositifs de terrain IP, et les résultats de traitement correspondants, renvoyés par les serveurs de contrôle respectifs via l'informatique en nuage, et générer une stratégie de contrôle coordonnée correspondante basée sur le résultat de l'analyse ;

6. Procédé selon la revendication 5, dans lequel le procédé comprend en outre l'étape consistant à :
si le premier noeud détermine que la stratégie de contrôle générée ne parvient pas à être appliquée, notifier alors le système central, de sorte que le système central recueille à nouveau des informations correspondantes acquises par les dispositifs de terrain IP, et des résultats de traitement correspondants pour la stratégie de contrôle, et génère une stratégie optimisée correspondante.

7. Équipement pour le traitement d'informations dans un système de contrôle de trafic intelligent basé sur l'informatique en nuage comprenant au moins une pluralité de serveurs de contrôle, et une pluralité de dispositifs de terrain IP, ou au moins une pluralité de serveurs de contrôle, une pluralité de dispositifs de terrain IP, et un système central, dans lequel le système central est connecté aux serveurs de contrôle sur un réseau, et les dispositifs de terrain IP sont connectés aux serveurs de contrôle sur des buses à large bande basées sur IP, l'équipement comprenant :
une unité de distribution (61) configurée pour distribuer des messages d'abonnement aux serveurs de contrôle pour ordonner aux serveurs de contrôle de renvoyer, par transmission, des informations acquises par les dispositifs de terrain IP locaux aux serveurs de contrôle, et des résultats de traitement correspondants au premier noeud lors de la détermination qu'une condition prédéfinie indiquée par les messages d'abonnement est satisfaite, dans lequel le premier noeud est le système central, ou un certain quelconque des serveurs de contrôle ; dans lequel le dispositif de terrain activé par IP fait référence à un dispositif, distribué à un passage de trafic respectif, configuré pour acquérir des données du passage de trafic, pour surveiller et contrôler en temps réel une condition de trafic au passage de trafic ;
une unité de réception (62) configurée pour recevoir les informations acquises par les dispositifs de terrain IP, et les résultats de traitement correspondants, renvoyés par les serveurs de contrôle ; et
une unité de génération (63) configurée pour analyser les informations obtenues acquises par les dispositifs de terrain IP, et des résultats de traitement correspondants, pour générer une stratégie de contrôle correspondante basée sur un résultat d'analyse, et pour appliquer la stratégie de contrôle générée dans le cas où le premier noeud est le certain quelconque des serveurs de contrôle, ou émettre la stratégie de contrôle générée vers un serveur de contrôle correspondant dans le cas où le premier noeud est le système central, de sorte que le serveur de contrôle correspondant reçoive et applique la stratégie de contrôle générée ;
dans lequel que la condition prédéfinie soit satisfaite ou non est déterminé par l'un quelconque des serveurs de contrôle après que le certain quelconque des serveurs de contrôle analyse des informations acquises par un ou plusieurs dispositifs de terrain IP correspondants ;
dans lequel la condition prédéfinie comprend une ou une combinaison quelconque des conditions suivantes :
qu'il existe un embouteillage survenant autour du certain serveur de contrôle ;
qu'il existe un accident de trafic survenant autour du certain serveur de contrôle ;
que la quantité d'informations acquises par les dispositifs de terrain IP et le résultat de traitement correspondant stocké dans le certain serveur de contrôle soit supérieure à un seuil prédéfini ; et
qu'un événement urgent survienne autour du certain serveur de contrôle ou du premier noeud.

8. Équipement selon la revendication 7, dans lequel avant que les messages d'abonnement ne soient distribués au niveau des serveurs de contrôle respectifs, l'équipement comprend en outre :
une unité de collecte (60) configurée pour collecter et stocker les informations acquises par les dispositifs de terrain IP locaux au niveau des serveurs de contrôle respectifs, et des résultats de traitement correspondants.

9. Équipement selon la revendication 7, dans lequel l'unité de distribution (61) configurée pour distribuer les messages d'abonnement aux serveurs de contrôle est configurée :
si l'équipement est le système central, pour distribuer les messages d'abonnement à tous les serveurs de contrôle ; et
si l'équipement est un certain des serveurs de contrôle, pour distribuer les messages d'abonnement à certains spécifiés parmi les autres serveurs de contrôle.

10. Équipement selon la revendication 9, dans lequel l'unité de distribution (61) configurée pour distribuer les messages d'abonnement à un certain des serveurs de contrôle est en outre configurée pour :
distribuer le message d'abonnement correspondant au certain serveur de contrôle sur la base de la position géographique du serveur de contrôle ; ou
distribuer le message d'abonnement correspondant au certain serveur de contrôle sur la base d'une condition de trafic environnante du serveur de contrôle ; ou
distribuer le message d'abonnement correspondant au certain serveur de contrôle sur la base du type de noeud du serveur de contrôle.

11. Équipement selon l'une quelconque des revendications 7 à 10, dans lequel l'unité de génération (63) configurée pour analyser les informations obtenues acquises par les dispositifs de terrain IP, et les résultats de traitement correspondants, et pour générer la stratégie de contrôle correspondante sur la base du résultat de l'analyse est configurée :
si l'équipement est le système central, pour analyser les informations obtenues acquises par les dispositifs de terrain IP, et des résultats de traitement correspondants, renvoyés par les serveurs de contrôle respectifs via l'informatique en nuage, et pour générer une stratégie de contrôle coordonnée correspondante basée sur le résultat de l'analyse ; et
si l'équipement est un certain des serveurs de contrôle, pour analyser les informations obtenues acquises par les dispositifs de terrain IP, et les résultats de traitement correspondants, renvoyés par les serveurs de contrôle respectifs via l'informatique en nuage, et pour générer une stratégie de contrôle coordonnée correspondante basée sur le résultat de l'analyse.

12. Équipement selon la revendication 11, dans lequel l'unité de génération (63) est en outre configurée pour :
s'il est déterminé que la stratégie de contrôle générée ne parvient pas à être appliquée, notifier alors le système central, de sorte que le système central recueille à nouveau des informations correspondantes acquises par les dispositifs de terrain IP, et des résultats de traitement correspondants pour la stratégie de contrôle, et génère une stratégie optimisée correspondante.
